# EUROPÄISCHE PATENTSCHRIFT

(11) **EP 1 552 187 B1**
(45) Veröffentlichungstag und Bekanntmachung des Hinweises auf die Patenterteilung: **25.08.2010**
(21) Anmeldenummer: 03757791.3
(22) Anmeldetag: 05.09.2003
(51) Int. Cl.: F16H 7/12

(54) **SPANNVORRICHTUNG FÜR EINEN ZUGMITTELTRIEB**
TENSIONING DEVICE FOR DRIVING A TRACTION MECHANISM
DISPOSITIF DE TENSION POUR ENTRAINEMENT A MECANISME DE TRACTION

(30) Priorität: 17.10.2002 DE 10248352
(43) Veröffentlichungstag der Anmeldung: 13.07.2005
(73) Patentinhaber: Schaeffler Technologies GmbH & Co. KG, 91074 Herzogenaurach (DE)
(72) Erfinder: KONANZ, Holger, 91056 Erlangen (DE)
(86) Internationale Anmeldenummer: PCT/EP2003/009858
(87) Internationale Veröffentlichungsnummer: WO 2004/036086

(56) Entgegenhaltungen:
- DE-A- 10 013 921
- DE-A- 19 540 706
- DE-A- 19 647 225
- DE-U- 9 218 566
- US-A- 5 236 396
- US-A- 5 250 009
- US-A- 5 449 328
- US-A1- 2002 119 850

## Beschreibung

Die Erfindung betrifft eine Spannvorrichtung, mit der ein Zugmittel, insbesondere ein Riemen für einen Zugmitteltrieb vorgespannt werden kann. Der Vorrichtungsaufbau umfasst ein Basisteil, welches über ein Drehlager mit einem Schwenkarm verbunden ist, an dessen freiem Ende eine an dem Zugmittel abgestützte Laufrolle drehbar angeordnet ist. Zur Erzielung einer kraftschlüssigen Abstützung der Laufrolle an dem Zugmittel ist ein Federmittel, insbesondere eine Torsionsfeder vorgesehen, die den Schwenkarm beaufschlagt. Die Spannvorrichtung ist weiterhin mit einer Dämpfungseinrichtung versehen, die eine Stellbewegung des Schwenkarms dämpft. Die Anlaufscheibe weist dazu eine konische Reibfläche auf, welche mit einer zugehörigen weiteren konisch gestalteten Kontaktfläche korrespondiert.

### Hintergrund der Erfindung

Eine Spannvorrichtung der zuvor beschriebenen Ausführungsform zeigt die DE 196 47 225 A1. Der Aufbau dieser Spannvorrichtung umfasst ein drehfixiert angeordnetes Basisteil, dessen Symmetrieachse gleichzeitig die Drehachse für den Schwenkarm bildet, dessen Laufrolle durch die zwischen dem Basisteil und dem Schwenkarm angeordnete Torsionsfeder kraftschlüssig an dem Zugmittel abgestützt ist. Als Dämpfungseinrichtung zeigt die bekannte Spannvorrichtung einen als separates Bauteil gestalteten Druckkonus, der formschlüssig in einen Reibkonus des Schwenkarms eingreift. Mittels einer zwischen dem Druckkonus und dem Basisteil eingesetzten Druckfeder stützt sich der Druckkonus kraftschlüssig an dem Reibkonus ab. Diese bekannte Dämpfungseinrichtung in einer Spannvorrichtung benötigt einen großen Bauraum zur Erzielung einer ausreichenden Reibfläche zwischen dem Druckkonus und dem Reibkonus. Weiterhin vergrößert sich nachteilig der Bauteileumfang durch die separate, dem Druckkonus zugeordnete Druckfeder.

Aus den US 52 36 396 ist eine Spannvorrichtung mit den Merkmalen des Oberbepriffs des Anspruchs 1 bekannt.

### Zusammenfassung der Erfindung

Die Nachteile der bekannten Spannvorrichtung vermeidend, ist es Aufgabe der vorliegenden Erfindung, ohne Vergrößerung des vorhandenen Bauraums und des Bauteileumfangs das Reibmoment der Dämpfungseinrichtung zu steigern.

Die zuvor genannte Problemstellung wird durch eine die Drehachse der Spannvorrichtung umschließende, geschlitzte Anlaufscheibe gelöst, die als einem Keilring bzw. einen Doppelkeilring aufweist. Der Keilning einen umfasst eine Innenfläche sowie eine Mantelfläche, die übereinstimmend kegelig verlaufen. In einer Einbaulage greift der erfindungsgemäße Keilring formschlüssig in eine kreisringförmige Ausnehmung des zugehörigen weiteren Bauteils der Spannvorrichtung ein. Die Kontaktflächen der kreisringförmigen Ausnehmung korrespondieren dabei mit der konisch verlaufenden Innenfläche bzw. der konisch gestalteten Mantelfläche des Keilrings, zur Bildung von zwei kegelig ausgerichteten Kontaktzonen. Die erfindungsgemäß geschlitzte Anlaufscheibe ermöglicht eine optimale Anpassung an die korrespondierenden Kontaktflächen des Bauteils, mit dem die Anlaufscheibe zusammenwirkt. Die einen Keilring aufweisende, zwei konische Flächen bildende Anlaufscheibe bewirkt eine gewünschte Steigerung des Reibmomentes. Das erfindungsgemäße Prinzip der Dämpfungseinrichtung ermöglicht weiterhin eine Trennung der Funktionen Reibungserzeugung und Gleitlagerung zwischen dem Basisteil und dem Schwenkarm der Spannvorrichtung. Diese Funktionstrennung hat als den weiteren Vorteil, dass sich der systembedingte Verschleiß im Bereich der konisch bzw. kegelig ausgerichteten Kontaktzonen sich nicht auf die Rechtwinkligkeit, die rechtwinklige Anordnung des Spannarms zu dem Basisteil auswirkt. Durch der radial beabstandet die Drehachse des Drehlagers der Spannvorrichtung umschließende erfindungsgemäße Keilring nimmt die erfindungsgemäße Dämpfungseinrichtung keinen Einfluss auf die Lagerung des Schwenkarms, deren Gestaltung und Länge von der Dämpfungseinrichtung unbeeinflusst bleibt.

Indem die erfindungsgemäße Anlaufscheibe unmittelbar bzw. mittelbar zwischen dem Basisteil und dem Schwenkarm angeordnet ist, wird eine Axialkraft der zwischen diesen Bauteilen eingesetzten Torsionsfeder unmittelbar auf den Keilring und damit auf deren kegelig verlaufende Innenfläche und Mantelfläche übertragen, was sich positiv auf die gewünschte höhere Reibkraft auswirkt. Die gesteigerte Reibung bewirkt eine wirksame Dämpfung der Stellbewegungen des Schwenkarms.

Weitere vorteilhafte Ausgestaltungen der Erfindung sind Gegenstand der abhängigen Ansprüche 2 bis 15.

Die erfindungsgemäße Dämpfungseinrichtung eignet sich für unterschiedlich aufgebaute, einen schwenkarm aufweisende Spannvorrichtungen. In Spannvorrichtungen, bei denen zur Bildung des Drehlagers, der Schwenkarm mit einer Nabe auf einem Zapfen des Basisteils drehbar gelagert ist, bietet es sich an, die Anlaufscheibe axial zwischen einem Flansch des Basisteils und der Nabe einzusetzen. Bei alternativ gestalteten Spannvorrichtungen, deren Drehlager von einer Welle des Schwenkarms sowie einer mit dem Basisteil verbundenen Führungsbuchse gebildet wird, ist die Anlaufscheibe axial zwischen dem Basisteil und einem mit dem Schwenkarm verbundenen Flansch bzw. Druckscheibe angeordnet.

In vorteilhafter Weise schließt die Erfindung weiterhin unterschiedliche Befestigungen oder Anordnungen der Reibscheibe in der Spannvorrichtung ein. Eine bevorzugte Anordnung sieht vor, dass die Anlaufscheibe an einem drehstarr angeordneten Bauteil der Spannvorrichtung angeordnet ist und deren kegelig verlaufende Innenfläche und Mantelfläche in die zugehörige Ausnehmung formschlüssig eingreift, die in einem schwenkbaren Bauteil der Spannvorrichtung angeordnet ist. Alternativ schließt die Erfindung eine Einbaulage der Anlaufscheibe ein, bei der diese an dem schwenkbaren Bauteil lagefixiert ist und mit einer Ausnehmung zusammenwirkt, die in einem drehstarren Bauteil der Spannvorrichtung eingebracht ist.

Für die erfindungsgemäße Dämpfungseinrichtung, deren Anlaufscheibe zwei konische Flächen umfasst ist vorzugsweise vorgesehen, das die Innenfläche und die Mantelfläche in einem in Winkel von ≤≦ 35° ausgerichtet sind. Den einen Doppelkeil bildende Keilring bewirkt eine deutliche Zunahme der Reibkraft und ermöglicht die gewünschte Trennung der Funktionen Reibungserzeugung und Gleitreibung der Anlaufscheibe Spannvorrichtung. Der systembedingte Verschleiß der Reibflächen der Anlaufscheibe wirkt sich damit nicht auf die Rechtwinkligkeit der sich bewegenden Bauteile der Spannvorrichtung aus.

Eine weitere Ausgestaltung der Erfindung sieht vor, die Anlaufscheibe aus Kunststoff herzustellen. Alternativ eignet sich eine Zweistoff-Anlaufscheibe, bei der die aus Kunststoff hergestellten Reibbeläge als separates Bauteil auf einer Scheibe, einem Trägerteil aufgetragen sind. Als Maßnahme den Verschleiß des Reibbelages bzw. der Anlaufscheibe zu optimieren, schließt die Erfindung weiterhin eine aus glasfaserverstärktem Kunststoff hergestellte Anlaufscheibe oder einen Reibbelag aus glasfaserverstärktem Kunststoff einzusetzen.

Die erfindungsgemäße Dämpfungseinrichtung ist nicht beschränkt auf die Verwendung der zuvor genannten Werkstoffe für die Anlaufscheibe. Beispielsweise kann die Anlaufscheibe ebenfalls aus einem organischen Kunststoff hergestellt werden oder aus weiteren geeigneten Werkstoffen.

Eine weitere vorteilhafte Ausgestaltung der Erfindung sieht vor, die Innenfläche und/oder die Mantelfläche der Anlaufscheibe zu profilieren bzw. mit einer Struktur zu versehen. Als geeignetes Profil bietet es sich an, die kegelig zueinander ausgerichteten Flächen, die Innenfläche und/oder die Mantelfläche beispielsweise mit strahlenförmig ausgerichteten Nuten oder Vertiefungen zu versehen, bzw. eine waffelartig strukturierte Fläche zu schaffen. Die Profilierung hat dabei insbesondere die Aufgabe, den verschleißbedingten Abrieb aus der Kontaktzone zwischen der Innenfläche und der Mantelfläche des Keilrings einerseits und der kegeligen Ausnehmung in dem zugehörigen Bauteil andererseits aufzunehmen. Der Nutverlauf kann dabei vorteilhaft so gestaltet werden, dass sie im eingebauten Zustand bedingt durch die Stellbewegung eines Bauteils der Abrieb sich über die Struktur bzw. Profilierung verlagert, d. h. sich aus der Kontaktzone entfernt, was sich positiv auf die Geräuschentwicklung auswirkt.

Alternativ oder zusätzlich zu der strukturierten Innenfläche und Mantelfläche der Anlaufscheibe schließt die Erfindung weiterhin eine entsprechend profilierte Kontaktfläche der kreisringförmigen Ausnehmung ein, in die im eingebauten Zustand die Anlaufscheibe eingreift.

Die erfindungsgemäße Dämpfungseinrichtung sieht vor, dass die Anlaufscheibe sowohl schmierstofffrei als auch mit einem Schmierstoff benetzt eingesetzt werden kann. Der Schmierstoff, der das Reibmoment der Dämpfungseinrichtung beeinflusst kann dabei beliebig in die Dämpfungseinrichtung eingebracht werden.

Als Maßnahme die Montage zu vereinfachen bietet es sich an, die Anlaufscheibe formschlüssig an einem Bauteil zu befestigen. Damit wird bei der Montage ein ungehindertes Einfügen der kegelig verlaufenden Innenfläche und Mantelfläche in die entsprechend korrespondierende kreisringförmige Ausnehmung des zugehörigen weiteren Bauteils sichergestellt. Zusätzlich zu einer formschlüssigen Verbidung, die beispielsweise partiell angeordnete Zapfen oder Vorsprünge der Anlaufscheibe vorsieht, die in entsprechende Aussparungen des Bauteils eingebracht sind, an dem die Anlaufscheibe lagefixiert ist, bietet es sich an, die Anlaufscheibe zusätzlich mittels einer unlösbaren Verbindung, insbesondere einer Verklebung oder einer Ultraschallschweißung zu befestigen.

### Kurze Beschreibung der Zeichnungen

Die Zeichnungen zeigen Ausführungsbeispiele der Erfindung, die nachfolgend näher beschrieben werden. Es zeigen:
- Figur 1: eine Spannvorrichtung in einem Längsschnitt, versehen mit einer erfindungsgemäßen Dämpfungseinrichtung;
- Figur 2: das Detail "X" gemäß Figur 1 in einem vergrößerten Maß- stab;
- Figur 3: eine zu Figur 1 alternativ gestaltete Spannvorrichtung in einem Längsschnitt;
- Figur 4: das Detail "Y" in einem vergrößerten Maßstab, bei der die Reibscheibe an dem Basisteil lagefixiert ist;
- Figur 5: die Reibscheibe gemäß Figur 4 teilweise in einer Einzel- teilzeichnung.

### Detaillierte Beschreibung der Zeichnungen

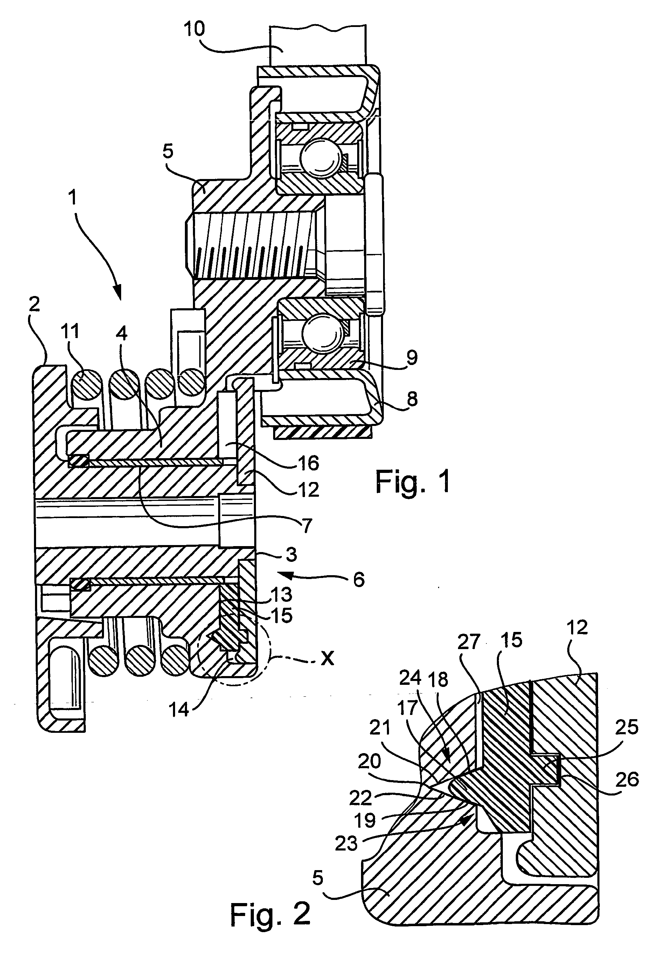

Die Figur 1 zeigt die Spannvorrichtung 1, bestehend aus einem ortsfest angeordneten Basisteil 2, das einen axial vorstehenden Zapfen 3 umfasst. Gemeinsam mit einer Nabe 4 eines Schwenkarms 5 bildet der Zapfen 3 ein Drehlager 6, das eine Gleitlagerbuchse 7 einschließt, die in einem radial von der Nabe 4 und dem Zapfen 3 begrenzten Bauraum angeordnet ist. An einem freien Ende des Schwenkarms 5 ist eine Laufrolle 8 über ein Wälzlager 9 drehbar angeordnet, wobei im eingebauten Zustand die Laufrolle 8 unmittelbar an einem Riemen 10, einem Zugmittel, abgestützt ist. Zur Erzielung einer kraftschlüssigen Anlage der Laufrolle 8 an dem Riemen 10 dient eine Torsionsfeder 11, die mit einem Federende an dem Basisteil 2 und mit dem weiteren Federende an dem Schwenkarm 5 lagepositioniert ist und den Schwenkarm 5 in eine, die VorSpannkraft des Riemens 10 erhöhende Position verschwenkt. Die Torsionsfeder 11 übt weiterhin eine Axialkraft aus, welche den Schwenkarm 5 in Richtung einer drehstarr mit dem Zapfen 3 verbundenen Druckscheibe 12 beaufschlagt. In einem axial von der Druckscheibe 12 und einer Abstützfläche 13 begrenzten Bauraum 14 ist eine Reibungsbuchse 15 angeordnet. Die einen Schlitz 16 aufweisende Anlaufscheibe hat die Aufgabe, die Stellbewegung des Schwenkarms 5 zu dämpfen.

Die Figur 2 zeigt in einer vergrößerten Darstellung die Einzelheit "X", gemäß Figur 1, und verdeutlicht die Einbaulage der Anlaufscheibe 15. Die Anlaufscheibe 15 ist in Richtung des Schwenkarms 5 zeigend mit einem axial vorstehenden Ansatz 17 versehen, der eine Innenfläche 18 sowie eine Mantelfläche 19 bildet, die übereinstimmend kegelig verlaufen. Der Ansatz 17 greift formschlüssig in eine kreisringförmige Ausnehmung 20 des Schwenkarms 5 ein. Dabei stützt sich die Innenfläche 18 sowie die Mantelfläche 19 an zugehörigen Kontaktflächen 21, 22 der Ausnehmung 20 ab zur Bildung von zwei kegelig ausgerichteten Kontaktzonen 23, 24. In der Einbaulage der Anlaufscheibe 15 bildet sich ein Spaltmaß 27 zwischen der Abstützfläche 13 und der Reibungsachse 15. Zur Erzielung einer definierten Reibungsdämpfung zwischen der Anlaufscheibe 15 und dem Schwenkarm 5 ist die Anlaufscheibe 15 an der Druckscheibe 12 lagefixiert. Dazu weist die Anlaufscheibe 15 zumindest einen Vorsprung 25 auf, welcher formschlüssig in eine Bohrung 26 der Druckscheibe 12 eingreift.

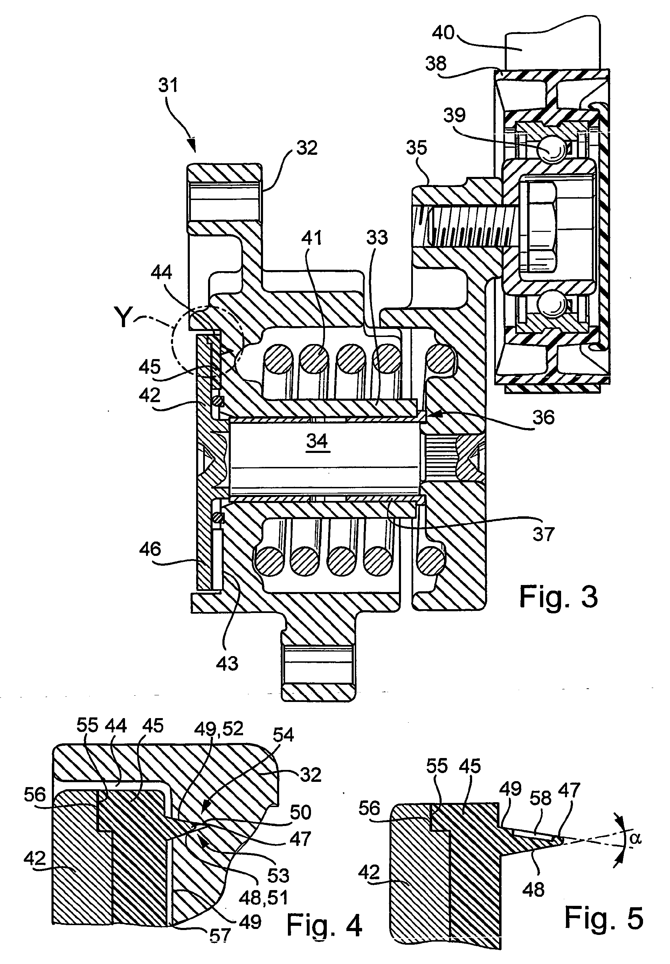

Die Figur 3 zeigt die Spannvorrichtung 31, bestehend aus dem Basisteil 32, das zentrisch eine axial ausgerichtete Buchse 33 einschließt. Gemeinsam mit einem in die Buchse 23 eingesetzten Lagerbolzen 34 des Schwenkarms 35 bildet die Buchse 33 das Drehlager 36. In einem von der Buchse 33 und dem Lagerbolzen 34 radial begrenzten Ringspalt ist die Gleitlagerbuchse 37 eingesetzt. Am freien Ende ist der Schwenkarm 35 mit einer Laufrolle 38 versehen, die über ein Wälzlager 39 drehbar gelagert ist, wobei die Laufrolle 38 im eingebauten Zustand an dem Riemen 40 kraftschlüssig abgestützt ist. Die kraftschlüssige Abstützung der Laufrolle 38 an dem Riemen 40 erfolgt mittels der Torsionsfeder 41, deren erstes Federende an dem Basisteil 32 und deren zweites Federende an dem Schwenkarm 35 lagepositioniert ist. Die Axialkraft der Torsionsfeder 41 wird mittels einer drehstarr an dem Lagerbolzen 34 befestigten Druckscheibe 42 abgefangen. Dabei stützt sich die Druckscheibe 42 über die einen Schlitz 46 aufweisende Anlaufscheibe 45 ab, welche in einem axial von der Abstützfläche 43 des Basisteils 32 und der Druckscheibe 42 begrenzten Bauraum 44 eingesetzt ist.

Die Figur 4 zeigt das Detail "Y" gemäß Figur 3 in einem vergrößerten Maßstab und verdeutlicht den erfindungsgemäßen Aufbau der Dämpfungseinrichtung. Die Anlaufscheibe 45 ist an der Druckscheibe 42 lagefixiert und weist dazu am Außenumfang einen axial vorstehenden Vorsprung 55 auf, der formschlüssig in eine Nut 56 der Druckscheibe 42 eingepasst ist. Damit stellt sich eine gezielte Reibungsdämpfung zwischen der Anlaufscheibe 45 und der Abstüfläche 43 des Basisteils 32 ein. Die ebenfalls einen Schlitz 46 aufweisende Anlaufscheibe 45 ist auf der von der Druckscheibe 42 abgewandten Seite mit einem axial vorstehenden umlaufenden Ansatz 47 versehen, der eine kegelig verlaufende Innenfläche 48 sowie eine kegelig ausgerichtete Mantelfläche 49 aufweist. Der Ansatz 47 ist in die Ausnehmung 50 des Basisteils 32 eingefügt, wobei die Ausnehmung 50 maßlich so gestaltet ist, dass der Ansatz 47 das Querschnittsprofil des Ansatzes 47 nicht vollständig ausfüllt, so dass sich ein axiales Spaltmaß 57 zwischen der Anlaufscheibe 45 und der Abstützfläche 47 des Basisteils 32 einstellt. Dabei stützt sich der Ansatz 47 über die Innenfläche 48 und die Mantelfläche 49 an dem weitestgehend übereinstimmend kegelig ausgerichteten Kontaktflächen 51, 52 ab, die gemeinsam die Kontaktzonen 53, 54 bilden.

Die Figur 5 verdeutlicht insbesondere Einzelheiten der Anlaufscheibe 45. Die zueinander kegelig ausgerichteten Flächen, die Innenfläche 48 und die Mantelfläche 49 sind in einem Winkel "α" zueinander ausgerichtet. Weiterhin zeigt die Mantelfläche 49 eine Struktur eine Längsnut 58, die vorgesehen ist um im Einbauzustand verschleißbedingten Abrieb der Anlaufscheibe 45 oder der zugehörigen Kontaktfläche 52 aufzunehmen. Als Maßnahme, um einen verschleißbedingten Abrieb aus den Kontaktzonen 53, 54 austragen zu können bietet es sich alternativ an, wechselweise Nuten in die Innenfläche und in die Mantelfläche einzubringen.

### Bezugszahlen

- 1: Spannvorrichtung
- 2: Basisteil
- 3: Zapfen
- 4: Nabe
- 5: Schwenkarm
- 6: Drehlager
- 7: Gleitlagerbuchse
- 8: Laufrolle
- 9: Wälzlager
- 10: Zugmittel
- 11: Torsionsfeder
- 12: Druckscheibe
- 13: Abstützfläche
- 14: Bauraum
- 15: Anlaufscheibe
- 16: Schlitz
- 17: Ansatz
- 18: Innenfläche
- 19: Mantelfläche
- 20: Ausnehmung
- 21: Kontaktfläche
- 22: Kontaktfläche
- 23: Kontaktzone
- 24: Kontaktzone
- 25: Vorsprung
- 26: Bohrung
- 27: Spaltmaß
- 28:
- 29: 30
- 30: 30
- 31: Spannvorrichtung
- 32: Basisteil
- 33: Buchse
- 34: Lagerbolzen
- 35: Schwenkarm
- 36: Drehlager
- 37: Gleitlagerbuchse
- 38: Laufrolle
- 39: Wälzlager
- 40: Riemen
- 41: Torsionsfeder
- 42: Druckscheibe
- 43: Abstützfläche
- 44: Bauraum
- 45: Anlaufscheibe
- 46: Schlitz
- 47: Ansatz
- 48: Innenfläche
- 49: Mantelfläche
- 50: Ausnehmung
- 51: Kontaktfläche
- 52: Kontaktfläche
- 53: Kontaktzone
- 54: Kontaktzone
- 55: Vorsprung
- 56: Nut
- 57: Spaltmaß
- 58: Längsnut

## Patentansprüche

1. Spannvorrichtung für einen Zugmitteltrieb, mit dem ein Zugmittel, insbesondere ein Riemen (10, 40), vorgespannt werden kann, die Spannvorrichtung (1, 31) umfasst:
- ein Basisteil (2, 32), das über ein Drehlager (6, 36) mit einem Schwenkarm (5, 35) verbunden ist, an dessen freien Ende eine an dem Zugmittel abgestützte, drehbare Laufrolle (8, 38) angeordnet ist;
- ein den Schwenkarm (5, 35) beaufschlagendes Federmittel, insbesondere eine Torsionsfeder (11, 41), die eine kraftschlüssige Abstützung der Laufrolle (8, 38) an dem Zugmittel sicherstellt;
- eine zwischen dem Basisteil (2, 32) und dem Schwenkarm (5, 35) eingesetzte Dämpfungseinrichtung, ausgebildet als eine konische Reibfläche aufweisende Anlaufscheibe (15, 45), die von einer Axialkraft der Torsionsfeder (11, 41) beaufschlagt, eine Stellbewegung des Schwenkarms (5, 35) dämpft;
die eine Drehachse des Drehlagers (6, 36) radial beabstandet umschließende, Anlaufscheibe (15, 45) weist einen Keilring auf, dessen Innenfläche (18, 48) und dessen Mantelfläche (19, 49) übereinstimmend kegelig verlaufen und den Keilring (15, 45) greift in einer Einbaulage in eine zugehörige kreisringförmige Ausnehmung (20, 50) der Spannvorrichtung (1, 31) formschlüssig ein, wobei Kontaktflächen (21, 22; 51, 52) der Ausnehmung (20, 50) gemeinsam mit der Innenfläche (18, 48) und der Mantelfläche (19, 49) des Keilrings (15, 45) korrespondieren, zur Bildung von zwei kegelig ausgerichteten Kontaktzonen (23, 24; 53, 54), **dadurch gekennzeichnet dass** die Anlaufscheibe geschlitzt ist.

2. Spannvorrichtung nach Anspruch 1, wobei zur Bildung des Drehlagers (6) eine Nabe (4) des Schwenkarms (5) auf einem Zapfen (3) des Basisteils (2) drehbar gelagert ist und die Anlaufscheibe (15) axial zwischen einer Druckscheibe (12) des Basisteils (2) und der Nabe (4) des Schwenkarms (5) eingesetzt ist.

3. Spannvorrichtung nach Anspruch 1, deren Drehlager (36) einen drehstarr mit dem Schwenkarm (35) verbundenen Lagerbolzen (34) umfasst, der in einer Buchse (33) des Basisteils (32) drehbar eingesetzt ist, wobei die Anlaufscheibe (45) axial zwischen dem Basisteil (32) und der Druckscheibe (42) des Schwenkarms (35) angeordnet ist.

4. Spannvorrichtung nach Anspruch 1, wobei in einer Einbaulage die Anlaufscheibe (15, 45) mit einem drehstarren Bauteil verbunden ist und in die Ausnehmung (20, 50) eingreift, die in einem zugehörigen schwenkbaren Bauteil der Spannvorrichtung (1, 31) eingebracht ist.

5. Spannvorrichtung nach Anspruch 1, wobei die unmittelbar oder mittelbar an dem Schwenkarm (5, 35) befestigte Anlaufscheibe (15, 45) mit der Ausnehmung (20, 50) zusammenwirkt, die in einem drehstarren Bauteil der Spannvorrichtung (1, 31) eingebracht ist.

6. Spannvorrichtung nach Anspruch 1, wobei die Anlaufscheibe (15) an einer drehstarr mit dem Basisteil (2) verbundenen Druckscheibe (12) lagefixiert ist.

7. Spannvorrichtung nach Anspruch 1, wobei die kegelig zueinander ausgerichtete Innenfläche (18, 48) und die Mantelfläche (19, 49) des Keilrings (15, 45) unter einem Winkel von ≤ 35° ausgerichtet sind.

8. Spannvorrichtung nach Anspruch 1, die eine aus Kunststoff hergestellte Anlaufscheibe (15, 45) umfasst bzw. die Anlaufscheibe (15, 45) mit aus Kunststoff hergestellten Reibbelägen versehen ist.

9. Spannvorrichtung nach Anspruch 1, wobei die Dämpfungseinrichtung eine aus organischem Kunststoff hergestellte Anlaufscheibe (15, 45) aufweist.

10. Spannvorrichtung nach Anspruch 1, wobei die Innenfläche (18, 48) und/oder die Mantelfläche (19, 49) der Anlaufscheibe (15, 45) profiliert bzw. strukturiert ist.

11. Spannvorrichtung nach Anspruch 1, wobei die kegelig gestalteten Kontaktflächen (21, 22; 51, 52) der Ausnehmung (20, 50), die mit der Anlaufscheibe (15, 45) zusammenwirken profiliert bzw. strukturiert gestaltet sind.

12. Spannvorrichtung nach Anspruch 1, wobei auf die Kontaktzonen (23, 24; 53, 545) der Dämpfungseinrichtung ein Schmierstoff aufgebracht ist.

13. Spannvorrichtung nach Anspruch 1, wobei die Dämpfungseinrichtung schmierstofffreie Kontaktzonen (23, 24; 53, 54) einschließt.

14. Spannvorrichtung nach einem der Ansprüche 4 bis 6, mit den Anlaufscheibe (15, 45) die formschlüssig an einem Bauteil der Spannvorrichtung (1, 31) befestigt ist.

15. Spannvorrichtung nach Anspruch 14, deren Anlaufscheibe (15, 45) zusätzlich zu einer formschlüssigen Verbindung eine unlösbare Verbindung einschließt, insbesondere eine Verklebung oder eine Ultraschallschweißung.

## Claims

1. Tensioning device for a traction mechanism drive by means of which a traction mechanism, in particular a belt (10, 40), can be pretensioned, the tensioning device (1, 31) comprising:
- a base part (2, 32) which is connected by means of a rotary bearing (6, 36) to a pivot arm (5, 35), on the free end of which is arranged a rotatable roller (8, 38) which is supported on the traction mechanism,
- a spring means, in particular a torsion spring (11, 41), which acts on the pivot arm (5, 35) and ensures non-positively locking support of the roller (8, 38) against the traction mechanism;
- a damping device which is inserted between the base part (2, 32) and the pivot arm (5, 35) and which is designed as a thrust washer (15, 45) which has a conical friction surface and which, acted on by an axial force of the torsion spring (11, 41), dampens an adjusting movement of the pivot arm (5, 35),
the thrust washer (15, 45) which surrounds a rotational axis of the rotary bearing (6, 36) with a radial spacing has a wedge ring whose inner surface (18, 48) and whose lateral surface (19, 49) run conically in corresponding fashion and the wedge ring (15, 45) engages, in an installed position, into an associated circular-ring-shaped recess (20, 50) of the tensioning device (1, 31) in a positively locking fashion, with contact surfaces (21, 22; 51, 52) of the recess (20, 50) together with the inner surface (18, 48) and the lateral surface (19, 49) of the wedge ring (15, 45) corresponding so as to form two conically aligned contact zones (23, 24; 53, 54), **characterized in that** the thrust washer is slotted.

2. Tensioning device according to Claim 1, wherein to form the rotary bearing (6), a hub (4) of the pivot arm (5) is rotatably mounted on a journal (3) of the base part (2) and the thrust washer (15) is inserted axially between a pressure disc (12) of the base part (2) and the hub (4) of the pivot arm (5).

3. Tensioning device according to Claim 1, the rotary bearing (36) of which comprises a bearing bolt (34) which is rotationally rigidly connected to the pivot arm (35) and which is rotatably inserted into a bush (33) of the base part (32), with the thrust washer (45) being arranged axially between the base part (32) and the pressure disc (42) of the pivot arm (35).

4. Tensioning device according to Claim 1, wherein in an installed position, the thrust washer (15, 45) is connected to a rotationally rigid component and engages into the recess (20, 50) which is formed in an associated pivotable component of the tensioning device (1, 31).

5. Tensioning device according to Claim 1, with the thrust washer (15, 45) which is fastened directly or indirectly to the pivot arm (5, 35) interacting with the recess (20, 50) which is formed in a rotationally rigid component of the tensioning device (1, 31).

6. Tensioning device according to Claim 1, with the thrust washer (15) being positionally fixed on a pressure disc (12) which is rotationally rigidly connected to the base part (2).

7. Tensioning device according to Claim 1, with the inner surface (18, 48) and the lateral surface (19, 49) of the wedge ring (15, 45), which are aligned conically with respect to one another, being aligned at an angle of ≤ 35°.

8. Tensioning device according to Claim 1, which tensioning device comprises a thrust washer (15, 45) produced from plastic, or the thrust washer (15, 45) is provided with friction linings produced from plastic.

9. Tensioning device according to Claim 1, with the damping device having a thrust washer (15, 45) produced from plastic.

10. Tensioning device according to Claim 1, with the inner surface (18, 48) and/or the lateral surface (19, 49) of the thrust washer (15, 45) being profiled or structured.

11. Tensioning device according to Claim 1, with the conically designed contact surfaces (21, 22; 51, 52) of the recess (20, 50) which interact with the thrust washer (15, 45) being of profiled or structured design.

12. Tensioning device according to Claim 1, with a lubricant being applied to the contact zones (23, 24; 53, 54) of the damping device.

13. Tensioning device according to Claim 1, with the damping device encompassing lubricant-free contact zones (23, 24; 53, 54).

14. Tensioning device according to one of Claims 4 to 6, having the thrust washer (15, 45) which is fastened in a positively locking manner to a component of the tensioning device (1, 31).

15. Tensioning device according to Claim 14, the thrust washer (15, 45) of which, in addition to a positively locking connection, encompasses a non-detachable connection, in particular an adhesive bond or an ultrasound-welded connection.

## Revendications

1. Dispositif de tension pour un entraînement à moyen de traction, avec lequel un moyen de traction, notamment une courroie (10, 40), peut être précontraint, le dispositif de tension (1, 31) comprenant :
- une partie de base (2, 32) qui est connectée par le biais d'un palier rotatif (6, 36) à un bras pivotant (5, 35), à l'extrémité libre duquel est disposé un galet de roulement rotatif (8, 38) supporté sur le moyen de traction ;
- un moyen de ressort sollicitant le bras pivotant (5, 35), notamment un ressort de torsion (11, 41) qui garantit un support par engagement par force du galet de roulement (8, 38) sur le moyen de traction ;
- un dispositif d'amortissement inséré entre la partie de base (2, 32) et le bras pivotant (5, 35), réalisé sous forme de disque de butée (15, 45) présentant une surface de friction conique, qui, sollicité par une force axiale du ressort de torsion (11, 41), amortit un mouvement de réglage du bras pivotant (5, 35) ;
- le disque de butée (15, 45) entourant à distance radiale l'axe de rotation du palier rotatif (6, 36) présentant une bague clavetée dont la surface interne (18, 48) et dont la surface d'enveloppe (19, 49) s'étendent sous forme conique en coïncidence l'une avec l'autre et la bague clavetée (15, 45) venant en prise dans une position de montage par engagement par correspondance géométrique dans un évidement de forme annulaire circulaire associé (20, 50) du dispositif de tension (1, 31), des surfaces de contact (21, 22 ; 51, 52) de l'évidement (20, 50) conjointement avec la surface interne (18, 48) et la surface d'enveloppe (19, 49) de la bague clavetée (15, 45), pour former deux zones de contact orientées en forme de cône (23, 24 ; 53, 54) ;
**caractérisé en ce que** le disque de butée est fendu.

2. Dispositif de tension selon la revendication 1, dans lequel, pour former le palier rotatif (6), un moyeu (4) du bras pivotant (5) est monté à rotation sur un tourillon (3) de la partie de base (2), et le disque de butée (15) est inséré axialement entre un disque de pression (12) de la partie de base (2) et le moyeu (4) du bras pivotant (5).

3. Dispositif de tension selon la revendication 1, dont le palier rotatif (36) comprend un boulon de palier (34) connecté de manière rigide en rotation au bras pivotant (35), qui peut être inséré de manière rotative dans une douille (33) de la partie de base (32), le disque de butée (45) étant disposé axialement entre la partie de base (32) et le disque de pression (42) du bras pivotant (35).

4. Dispositif de tension selon la revendication 1, dans lequel, dans une position de montage, le disque de butée (15, 45) est connecté à un composant rigide en rotation, et vient en prise dans l'évidement (20, 50), qui est pratiqué dans un composant pivotant associé du dispositif de tension (1, 31).

5. Dispositif de tension selon la revendication 1, dans lequel le disque de butée (15, 45) fixé directement ou indirectement au bras pivotant (5, 35) coopère avec l'évidement (20, 50) qui est pratiqué dans un composant rigide en rotation du dispositif de tension (1, 31).

6. Dispositif de tension selon la revendication 1, dans lequel le disque de butée (15) est fixé en position sur un disque de pression (12) connecté de manière rigide en rotation à la partie de base (2).

7. Dispositif de tension selon la revendication 1, dans lequel la surface interne (18, 48) et la surface d'enveloppe (19, 49) de la bague clavetée (15, 45), orientées de manière conique l'une par rapport à l'autre, sont orientées suivant un angle ≤ 35°.

8. Dispositif de tension selon la revendication 1, qui comprend un disque de butée (15, 45) fabriqué en plastique, ou bien le disque de butée (15, 45) est pourvu de garnitures de friction fabriquées en plastique.

9. Dispositif de tension selon la revendication 1, dans lequel le dispositif d'amortissement présente un disque de butée (15, 45) fabriqué en plastique organique.

10. Dispositif de tension selon la revendication 1, dans lequel la surface interne (18, 48) et/ou la surface d'enveloppe (19, 49) du disque de butée (15, 45) est profilée ou structurée.

11. Dispositif de tension selon la revendication 1, dans lequel les surfaces de contact de configuration conique (21, 22 ; 51, 52) de l'évidement (20, 50), qui coopèrent avec le disque de butée (15, 45), sont configurées de manière profilée ou structurée.

12. Dispositif de tension selon la revendication 1, dans lequel un lubrifiant est appliqué sur les zones de contact (23, 24 ; 53, 54) du dispositif d'amortissement.

13. Dispositif de tension selon la revendication 1, dans lequel le dispositif d'amortissement inclut des zones de contact (23, 24 ; 53, 54) exemptes de lubrifiant.

14. Dispositif de tension selon l'une quelconque des revendications 4 à 6, avec le disque de butée (15, 45) qui est fixé par engagement par correspondance géométrique à un composant du dispositif de tension (1, 31).

15. Dispositif de tension selon la revendication 14, dont le disque de butée (15, 45) inclut en plus d'une connexion par engagement par correspondance géométrique, une connexion non desserrable, notamment un collage ou un soudage aux ultrasons.
